# EUROPEAN PATENT APPLICATION

(11) **EP 4 183 759 A1**
(43) Date of publication of application: **24.05.2023**
(21) Application number: 21209462.7
(22) Date of filing: 22.11.2021
(51) Int. Cl.: C04B 26/26, C04B 40/00, C08L 95/00

(54) **CRUMB-RUBBER-MODIFIED ASPHALT MIXTURE**

(71) Applicant: Vilnius Gediminas Technical University, 10223 Vilnius (LT)
(72) Inventor: Vaitkus, Audrius, 08439 Vilnius (LT); Sernas, Ovidijus, 08217 Vilnius (LT); Grazulyte, Judita, 09302 Vilnius (LT)
(74) Representative: Klimaitiene, Otilija

(57) **Abstract**

The invention belongs to the field of construction industry, more specifically, this is an asphalt mixture composition applicable and efficient for traffic areas (roads, streets, parking lots), complying with specific requirements for resistance to permanent deformation, resistance to fatigue and low-temperature-cracking. The invented solution is a crumb-rubber-modified asphalt mixture composition, which includes a mixture of aggregates from fractionated crushed stone and filler, adhesive agent, cellulose fiber, modified crumb rubber and bitumen, where the mixture components have the following ratios by weight %:
• 5-8 mm granite crushed stone fraction - 55.0-59.0;
• 2-5 mm granite crushed stone fraction - 15.0-19.0;
• 0-2 mm sieved granite chippings fraction - 15.0-19.0,
• filler - 5.0-8.0,
• 0-0.6 mm modified crumb rubber - 0.75-1.25,
• adhesive agent - 0.01-0.03,
• cellulose fiber - 0.30-0.5,
• bitumen 50/70 - 6.5-7.2.
where the crumb rubber is modified using filler and cross-linking agent and is incorporated into the asphalt aggregates mixture before mixing it with bitumen.

## Description

### TECHNICAL FIELD

The invention belongs to the field of construction industry, more specifically, to asphalt mixture composition for traffic areas (roads, streets, parking lots) complying with specific requirements for resistance to permanent deformation, resistance to fatigue and low-temperature-cracking.

### BACKGROUND ART

It is known that to ensure sufficient conditions for road users, it is very important to use the highest quality materials for pavement construction. Driving quality mostly depends on asphalt pavement conditions. If there are ruts, potholes, or cracks, the pavement is uneven and can be not safe. The use of optimal proportions of the polymer-SBS-modified bitumen and crushed aggregates (e.g., granite) can ensure sufficient asphalt pavements performance. However, polymer-modified bitumen is very expensive.

The dramatic growth of amount of end-of-life tires around the globe was recorded due to the increasing number of vehicles. Since burying end-of-life tires in landfills is forbidden, the most rational re-use of used tires has been constantly developing to achieve maximum energy potential. According to the data by the European Tyre & Rubber Manufacturers' Association (ETRMA), crumb rubber from tires is successfully used to manufacture flooring in sports venues, as a filler for sound barriers, to manufacture various roofing and insulation materials, to develop solutions that reduce noise caused by trains and trams.

The incorporation of crumb rubber into asphalt mixtures has been a major advancement in the using recycled materials in asphalt pavements. Tires contain some of the polymeric components that have been used to modify the asphalt binders for decades, but in a solid form (as disclosed by Alireza Zeinali, Phillip B. Blankenship, Kamyar C. Mahboub. Comparison of Performance Properties of Terminal Blend Tire Rubber and Polymer Modified Asphalt Mixtures. Second Transportation & Development Congress (2014) 239-248).

There are known two methods of crumb rubber incorporation into bitumen or asphalt mixture: a wet process and a dry process. The wet process is mostly preferred because of its better performance than the dry process. Usually, better performance is caused by adhesion between the binder and crumb rubber, because in the wet process, firstly, the binder and crumb rubber is mixed, while in the dry process, the binder and crumb rubber are added directly into a mixer with other mixture components (as disclosed by Junan Shen, Bo Li, Zhaoxing Xie. Interaction between crumb rubber modifier (CRM) and asphalt binder in dry process. Construction and Building Materials (2017) 202-206).

The use of crumb rubber for bitumen modification has shown promising results (as disclosed by Amir Ghavibazoo, Magdy Abdelrahman. Effect of Crumb Rubber Dissolution on Low-Temperature Performance and Aging of Asphalt-Rubber Binder. 93th Annual Meeting of the Transportation Research Board (2014) 1-15). The use of crumb rubber for bitumen modification improves the rheological characteristics, and this modification effect increases with the increase of the amount of crumb rubber (as disclosed by Bernardo Celauro, Clara Celauro, Davide Lo Presti. Definition of a laboratory optimization protocol for road bitumen improved with recycled tire rubber. Construction and Building Materials (2012) 562-572).

However, bitumen modification only with crumb rubber cannot ensure storage stability, viscosity and a significant increase of critical maximum and minimum temperatures (as disclosed by Gary R. Hicks, Susan Tighe, Seyed Tabib, DingXin Cheng. Rubber Modified Asphalt. Technical Manual. The Ontario Ministry of Transportation. 2013).

The amount of crumb rubber, higher from 2 to 4 times, can be used during the dry process. Moreover, the dry process does not require any special equipment and allows more easily incorporate crumb rubber into the asphalt mixture because crumb rubber is added into a common mixer just before adding the binder (as disclosed by Seyed Amid Tahami, Ali Foroutan Mirhosseinib, Samer Dessoukya, Helge Morkb, Amir Kavussic. The use of high content of fine crumb rubber in asphalt mixes using dry process. Construction and Building Materials (2019) 643-653).

It is known that crumb rubber added as a component into the asphalt mixture helps to reduce environmental problems, and also improves asphalt mixture properties: stiffness, rutting resistance, water sensitivity, resistance to fatigue and low-temperature-cracking.

However, using unmodified crumb rubber in the asphalt mixture, usually cause poor performance properties of the asphalt layer. This poor performance mostly comes from insufficient adhesion between crumb rubber and bitumen.

There are known poroelastic pavements that contain about 20% of crumb rubber and have an open (porous) structure. They are usually referred to as Poroelastic Road Surfaces (PERS) and are usually designed with the use of polyurethane binder. This type of pavement exhibits a very positive effect on tire/road noise. However, the development of it is only in the experimental stage. Insufficient durability is one of the most important issues to be solved (as disclosed by Piotr Jaskula, Cezary Szydlowski, Marcin Stienss, Dawid Rys, Mariusz Jaczewski, Marek Pszczola. Durable poroelastic wearing course SEPOR with highly modified bitumen. Transportation Research Procedia (2020) 882-889).

There is a known asphalt mixture modified by 5% of crumb rubber. It was disclosed that stiffness modulus using 5% of crumb rubber has lower values than conventional mixtures. This is because of low adhesion between crumb rubber and binder during the dry process (as disclosed by Mahyar Arabani, Seyed Amid Tahami, Gholam Hossein Hamedi. Performance evaluation of dry process crumb rubber-modified asphalt mixtures with nanomaterial. Road Materials and Pavement Design (2018) 1241-1258).

It is known that using 3-5% of crumb rubber for asphalt mixture modification because of poor adhesion between crumb rubber and bitumen, the sensitivity to water is higher when compared to conventional mixtures. Crumb rubber modified asphalt mixtures are more sensitive to water, when compared to conventional asphalt mixture (as disclosed by Mujibur Rahman. Characterisation of dry process crumb rubber modified asphalt mixtures. The University of Nottingham. 2004).

There are known crumb-rubber-modified asphalt mixtures with 1.5% of crumb rubber. However, indirect tensile strength slightly decreases with the usage of a higher amount of crumb rubber (as disclosed by F. Moreno-Navarro, M. Sol-Sanchez, M.C. Rubio-Gámez, M. Segarra-Martínez. The use of additives for the improvement of the mechanical behavior of high modulus asphalt mixes. Construction and Building Materials (2014) 65-70).

To improve the properties of the crumb-rubber-modified asphalt mixture, a special additive or modified crumb rubber should be used. There are known many possible crumb rubber additives in the market. However, there is a lack of practice, which would confirm the advantages of different additives.

There are known filler and a cross-linking agent modified crumb rubber. Usually, this additive consists of 62-65% crumb rubber, 20-25% soft bitumen, 15-20% filler, and a small amount of cross-linking agent. Soft bitumen improves viscosity and workability even if a high amount of crumb rubber is used while the filler is used to improve the interaction between crumb rubber and bitumen. Better adhesion leads to reduced water sensitivity. Elastomeric crumb rubber particles evenly mix with bitumen, then filler molecules create an interconnected network with the rubber particles, thereby, forming a cohesive blend of asphalt, rubber, and the stabilizer (as disclosed by Sampat Kedarisetty, Krishna Prapoorna Biligiri, Jorge B. Sousa. Advanced rheological characterization of Reacted and Activated Rubber (RAR) modified asphalt binders. Construction and Building Materials (2016) 12-22).

Also, semicrystalline polyoctenamer additive is known, which chemically reacts with both crumb rubber and bitumen, thereby, a rubber-like homogenous composite is formed, meanwhile, crumb rubber alone is recognized as a nonreactive additive to bitumen. It can be used with all kinds of bitumen and in every sort of asphalt mixture. This additive is applied to the aggregate mixture before bitumen in the dry process to improve workability, properties of the asphalt mixture such as resistance to rutting and cracking, reduction of traffic noise. This additive allows to work in lower temperatures, as a result, decreases emissions. Also, it helps to avoid sticking between rubber particles. Moreover, rubber less sticks to machines of compacting or transporting (as disclosed by Golzin Yadollahi, Hamid Sabbagh Mollahosseini. Improving the performance of Crumb Rubber bitumen by means of Poly Phosphoric Acid (PPA) and Vestenamer additives. Construction and Building Materials (2011) 3108-3116).

The closest crumb-rubber-modified asphalt mixture is the BBTM11 prototype. This mixture consists of ophite aggregates, Portland cement filler, bitumen 50/70, and unmodified crumb rubber (particles size <0.6 mm). However, using 0.5%, 1.0% and 1.5% of crumb rubber in the mixture, a test on the resulting asphalt sample showed relatively low rutting resistance and stiffness. This poor performance mostly could come from insufficient adhesion between crumb rubber and bitumen. Moreover, the use of Portland cement for asphalt mixture manufacturing is not an economic solution (as disclosed by Moreno, M. Sol, J. Martin, M. Perez, M.C. Rubio. The effect of crumb rubber modifier on the resistance of asphalt mixes to plastic deformation. Materials & Design (2013) 274-280).

### SUMMARY OF INVENTION

The technical problem of this invention is to create an asphalt mixture with crumb rubber, for the installation of roads, streets, parking lots complying with the specific requirements for resistance to permanent deformation, resistance to fatigue and low-temperature-cracking.

The invented solution discloses a new asphalt mixture composition, which comprises a mixture of aggregates from fractionated crushed stone and filler, adhesive agent, cellulose fiber, modified crumb rubber and bitumen, where these components have the following ratios in the asphalt mixture, by their weight %:
- 5-8 mm granite crushed stone fraction - 55.0-59.0,
- 2-5 mm granite crushed stone fraction - 15.0-19.0,
- 0-2 mm sieved granite chippings fraction - 15.0-19.0,
- filler - 5.0-8.0,
- 0-0.6 mm modified crumb rubber - 0.75-1.25,
- adhesive agent - 0.01 -0.03,
- cellulose fiber - 0.30-0.5,
- bitumen 50/70 - 6.5-7.2.

This mixture also features a specific aggregate-size-distribution of the aggregates, where different size sieves fractionize the mixture by the following ratios of weight %:
- passing a 0.063 mm sieve - 8.0-11.0,
- passing a 0.125 mm sieve - 10.0-13.0,
- passing a 0.250 mm sieve - 14.0-17.0,
- passing a 0.5 mm sieve - 15.0-19.0,
- passing a 1.0 mm sieve - 18.0-22.0,
- passing a 2.0 mm sieve - 22.0-26.0,
- passing a 5.6 mm sieve - 47.0-51.0,
- passing an 8.0 mm sieve - 92.0-98.0,
- passing an 11.0 mm sieve -100.0.

These crumb-rubber-modified asphalt mixtures have shown good mechanical and performance properties for their applications (installation of roads, streets, parking lots complying with the specific requirements).

### DETAILED DESCRIPTION OF PREFERRED EMBODIMENTS

### Example 1 of crumb-rubber-modified asphalt mixture composition

- 5-8 mm granite crushed stone fraction - 52.9,
- 2-5 mm granite crushed stone fraction - 15.8,
- 0-2 mm sieved granite chippings fraction - 16.3,
- filler - 6.5,
- 0-0.6 mm modified crumb rubber - 1,0,
- adhesive agent - 0.02,
- cellulose fiber - 0.4,
- bitumen 50/70 - 7.1.

### Example 2 of crumb-rubber-modified asphalt mixture composition

- 5-8 mm granite crushed stone fraction - 54.0,
- 2-5 mm granite crushed stone fraction - 15.8,
- 0-2 mm sieved granite chippings fraction - 16.3,
- filler - 5.6,
- 0-0.6 mm modified crumb rubber - 1.0,
- adhesive agent - 0.02,
- cellulose fiber - 0.40,
- bitumen 50/70 - 6.9.

The physical and mechanical properties of crumb rubber modified mixture must meet the requirements given in Table 1:

**Table 1. Required mechanical properties for crumb rubber modified bitumen.**

| **Feature** | **Standard** | **Value required** |
|---|---|---|
| Bulk density, Mg/m³ | LST EN 12697-6, 9.4 cl. | ≥ 2410 |
| Maximum density, Mg/m³ | LST EN 12697-5 | ≥ 2420 |
| Air voids content, % | LST EN 12697-8 | 2.0-3.5 |
| Stiffness, MPa (at 20 °C test temperature) | LST EN 12690-26, IT-CY | ≥ 2800 |
| Proportional rut depth PRD_{AIR} (at 60 °C test temperature) | LST EN 12697-22 | ≤ 5.0 |
| Water sensitivity ITSR, % | LST EN 12697-12 | ≥ 90.0 |

The developed crumb-rubber-modified asphalt mixture has shown good mechanical and performance characteristics and durability for their specific use conditions.

In order to improve modified asphalt mixture properties, filler and a cross-linking agent modified crumb rubber was used. One of the product available in the market - "Orzet active fine powder" or alternative could be used for the asphalt mixture modification. Filler and cross-linking agent modified crumb rubber is well-known for the specialists of this field.

The invention can be applied to install pavements for traffic areas (roads, streets, parking lots). The developed asphalt/concrete composite modules (slabs) have good mechanical and performance characteristics, durability, and low cost.

## Claims

1. A crumb-rubber-modified asphalt mixture composition for pavements of traffic areas with proportional rut depth PRD_{AIR}≤5,0%, stiffness ≥2800 MPa, and water sensitivity ITSR ≥90%,
- said composition comprises adhesive agent, cellulose fiber, bitumen 50/70, 5-8 mm granite crushed stone fraction, 2-5 mm granite crushed stone fraction, 0-2 mm sieved granite chippings fraction, and filler,
- wherein the composition further comprises crumb rubber of 0.75% to 1.25% by weight,
**characterized in that**
- the crumb rubber comprises particles of size ≤06 mm, wherein the crumb rubber is modified using filler and cross-linking agent,
- and said modified crumb rubber is incorporated into the asphalt aggregates mixture before mixing it with bitumen.

2. The composition according to claim 1, **characterized in that** it comprises components by the following ratios of weight %:
• 5-8 mm granite crushed stone fraction - 55.0-59.0,
• 2-5 mm granite crushed stone fraction - 15.0-19.0,
• 0-2 mm sieved granite chippings fraction - 15.0-19.0,
• filler - 5.0-8.0,
• 0-0.6 mm modified crumb rubber - 0.75-1.25,
• adhesive agent - 0.01 -0.03,
• cellulose fiber - 0.30-0.5,
• bitumen 50/70 - 6.5-7.2.

3. The composition according to claims 1 and 2, **characterized in that** size-distribution of the sieved aggregates mixture has following ratios of weight %:
• passing a 0.063 mm sieve - 8.0-11.0,
• passing a 0.125 mm sieve - 10.0-13.0,
• passing a 0.250 mm sieve - 14.0-17.0,
• passing a 0.5 mm sieve - 15.0-19.0,
• passing a 1.0 mm sieve - 18.0-22.0,
• passing a 2.0 mm sieve - 22.0-26.0,
• passing a 5.6 mm sieve - 47.0-51.0,
• passing an 8.0 mm sieve - 92.0-98.0,
• passing an 11.0 mm sieve -100.0.
